# EUROPEAN PATENT APPLICATION

(11) **EP 3 297 327 A1**
(43) Date of publication of application: **21.03.2018**
(21) Application number: 15891673.4
(22) Date of filing: 30.10.2015
(51) Int. Cl.: H04W 36/08, H04W 36/22

(54) **HANDOFF METHOD AND DEVICE IN HET-NET**

(30) Priority: 13.05.2015 CN 201510242598
(71) Applicant: ZTE Corporation, Shenzhen, Guangdong 518057 (CN)
(72) Inventor: LI, Gang, Shenzhen Guangdong 518057 (CN); YAN, Shengnan, Shenzhen Guangdong 518057 (CN)
(74) Representative: Studio Torta S.p.A.
(86) International application number: PCT/CN2015/093436
(87) International publication number: WO 2016/179975

(57) **Abstract**

Disclosed are a handoff method and device in a het-net. The method comprises: performing a detection on a service load of a macro-cell; if the service load of the macro-cell is greater than or equal to a first threshold, enabling a user terminal in the macro-cell to perform a measurement process, and receiving a measurement result reported by the user terminal in the macro-cell; and if the measurement result represents that a micro-cell having a service priority higher than the service priority of the macro-cell is present, enabling the user terminal in the macro-cell to be handed off to the micro-cell.

## Description

### TECHNICAL FIELD

The present application relates to, but is not limited to, the field of communication.

### BACKGROUND

With rapid growth of intelligent terminals, rapid development of mobile Internet such as 4G (4th generation, fourth generation of mobile communication technology), commercial application of LTE (Long Term Evolution) mobile communication technology, rapid growth of the mobile internet economy such as mobile multimedia services and mobile shops, mobile data traffic over the world will increase several dozens of times. Accordingly, the increasing rate of the traffic of the base stations of the cells increases year by year, and the spectrum is exhausted year by year. Therefore, the processing capacity of the base stations is facing challenge.

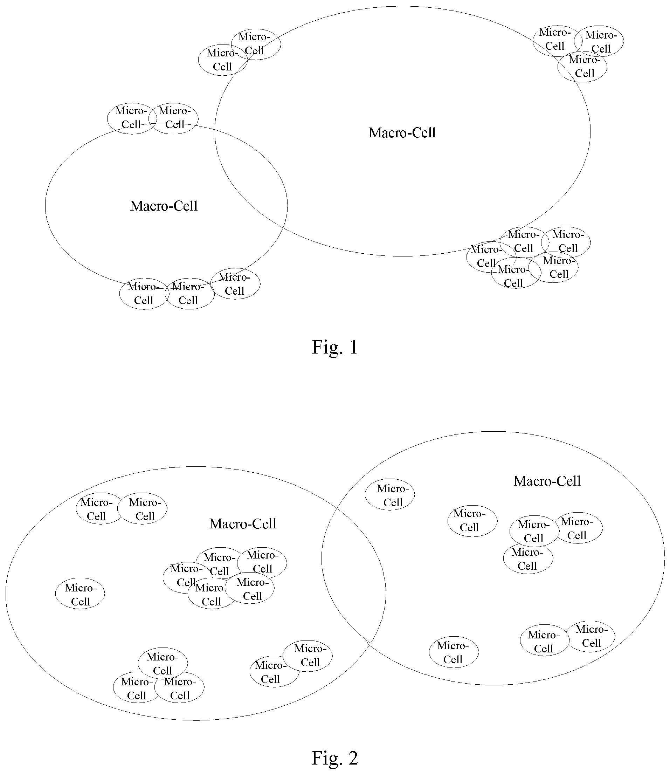

Due to the scarcity of spectrum resources and the difficulty in obtaining site resources, the conventional Homogeneous Network (horizontal single-layer isomorphic network) shown in Fig. 1 has been unable to carry such a centralized data traffic. In this case, a Het-Net (heterogeneous network) as shown in Fig. 2 has been proposed and has been considered an effective solution in the industry. The collaborative Heterogeneous network of macro-cell and micro-cell will be the future trend to solve issues of the mobile communication network coverage and capacity. The stereo and hierarchical architecture of the macro-cell and micro-cell will also make the deployment of the base stations more flexible. The micro-cell may serve as an effective complement to the macro cellular network. Moreover, in a place with intensive population and significant tidal effect, the macro-cell may be used for improving coverage, and the micro-cell may be used for sharing capacity. The micro-cell may absorb traffic of the macro-cell in a busy cell, improve the experience of hot pot users and indoor users. The collaborative macro-cell and micro-cell may reduce CAPEX (Capital Expense) and OPEX (Operating Expense) to achieve double lifts in coverage and capacity for the mobile network.

As shown in Fig. 2, the Micro-Cell can be considered as a subnet under the Macro-Cell. The Micro-Cell may form a multi-band, multi-cell and multi-layer stereo network together with the Macro-Cell. Different from the HHO (Horizontal Handoff) under the isomorphic network, the handoff between the macro-cell and the micro-cell of the heterogeneous network may be referred to as VHO (Vertical Handoff).

### SUMMARY

The following is an overview of the subject matter described in detail herein. This summary is not intended to limit the protection scope of the claims.

There is provided a handoff in a heterogeneous network that enables the macro-cell and the micro-cell to collaboratively handle the cell capacity.

A handoff method in a heterogeneous network includes:
detecting a service load of a macro-cell, when the service load of the macro-cell is larger than or equal to a first threshold, starting a measurement process of a user terminal under the macro-cell, and receiving a measurement result reported by the user terminal under the macro-cell; and
when the measurement result indicates that a micro-cell has a service priority higher than a service priority of the macro-cell, initiating a handoff of the user terminal under the macro-cell to the micro-cell.

Optionally, the method also includes:
when the service load of the macro-cell is larger than or equal to the first threshold, in case where the service priority of the macro-cell is a first priority, adjusting the service priority of the macro-cell to a second priority;
wherein the first priority is higher than the second priority, and higher than the service priority of the micro-cell; and
the second priority is lower than the service priority of the micro-cell.

Optionally, the method also includes:
when the service load of the macro-cell is smaller than or equal to a second threshold, in case where the service priority of the macro-cell is the second priority, adjusting the service priority of the macro-cell to the first priority;
wherein the second threshold is smaller than the first threshold.

Optionally, when the service load of the macro-cell is larger than or equal to the first threshold, prior to the step of starting a measurement process of a user terminal under the macro-cell, the method further includes:
reporting a cell resource state indication message to a controller at the network side;
wherein the cell resource state indication message carries information about location distribution of users under the macro-cell; and
the information about location distribution of users is for instructing the controller to activate a corresponding micro-cell.

Optionally, prior to the step of detecting a service load of a macro-cell, the method further includes:
receiving an instruction for a controller at the network side to start measurement of the cell service of the macro-cell, the measurement of the cell service including detecting the service load of the macro-cell and the user location distribution under the macro-cell; and
when the service load of the macro-cell is larger than or equal to the first threshold, prior to the step of starting a measurement process of a user terminal under the macro-cell, the method further includes:
   sending a cell service measurement report to the controller, the cell service measurement report carrying information about the location distribution of users under the macro-cell, and the cell service measurement report being for instructing the controller to activate a corresponding micro-cell.

Optionally, the method also includes:
detecting a service load of a micro-cell;
when the service load of the micro-cell is smaller than or equal to a third threshold, starting a measurement process, and receiving a measurement result reported by the user terminal under the micro-cell; and
when the measurement result indicates that the macro-cell has a service priority higher than the service priority of the micro-cell, initiating a handoff of the user terminal under the micro-cell to the macro-cell.

Optionally, the method also includes:
when the micro-cell has no user terminal access to the micro-cell for a time period longer than or equal to a time threshold, notifying the controller at the network side to deactivate the micro-cell.

A handoff method in a heterogeneous network includes:
detecting a service load of a micro-cell;
when the service load of the micro-cell is smaller than or equal to a third threshold, starting a measurement process, and receiving a measurement result reported by the user terminal under the micro-cell; and
when the measurement result indicates that the macro-cell has a service priority higher than the service priority of the micro-cell, initiating a handoff of the user terminal under the micro-cell to the macro-cell.

Optionally, the method also includes:
when the micro-cell has no user terminal access to the micro-cell for a time period longer than or equal to a time threshold, reporting a message indicating an idle resource state to a controller at the network side, the message indicating an idle resource state being for instructing the controller to deactivate the micro-cell.

Optionally, prior to the step of detecting a service load of a micro-cell, the method further includes:
after the micro-cell is activated, receiving an instruction for a controller at the network side to start the measurement of the cell service of the micro-cell, the measurement of the cell service including detecting the service load of the micro-cell; and
when the micro-cell has no user terminal access to the micro-cell for a time period longer than or equal to the time threshold, sending a cell service measurement report indicating an idle state to the controller, the cell service measurement report indicating an idle state being for instructing the controller to deactivate the micro-cell.

A handoff device in a heterogeneous network includes:
a first trigger module configured to detect a service load of a macro-cell, when the service load of the macro-cell is larger than or equal to a first threshold, start a measurement process of a user terminal under the macro-cell, and receive a measurement result reported by the user terminal under the macro-cell; and
a first handoff control module configured to, when the measurement result indicates that a micro-cell has a service priority higher than a service priority of the macro-cell, initiate a handoff of the user terminal under the macro-cell to the micro-cell.

Optionally, the first trigger module is further configured to, when the service load of the macro-cell is larger than or equal to the first threshold, in case where the service priority of the macro-cell is a first priority, adjust the service priority of the macro-cell to a second priority;
wherein the first priority is higher than the second priority, and higher than the service priority of the micro-cell; and
the second priority is lower than the service priority of the micro-cell.

Optionally, the first trigger module is further configured to, when the service load of the macro-cell is smaller than or equal to a second threshold, in case where the service priority of the macro-cell is the second priority, adjust the service priority of the macro-cell to the first priority; wherein the second threshold is smaller than the first threshold.

Optionally, the first trigger module is further configured to, when the service load of the macro-cell is larger than or equal to the first threshold, prior to the step of starting a measurement process of a user terminal under the macro-cell, report a cell resource state indication message to a controller at the network side; the cell resource state indication message carrying information about location distribution of users under the macro-cell; and the information about location distribution of users being for instructing the controller to activate a corresponding micro-cell.

Optionally, the first trigger module is further configured to, prior to the step of detecting a service load, receive an instruction for a controller at the network side to start measurement of the cell service of the macro-cell, the measurement of the cell service including detecting the service load of the macro-cell and the user location distribution under the macro-cell; and when the service load of the macro-cell is larger than or equal to the first threshold, prior to the step of starting a measurement process of a user terminal under the macro-cell, send a cell service measurement report to the controller, the cell service measurement report carrying information about the location distribution of users under the macro-cell, and the cell service measurement report being for instructing the controller to activate a corresponding micro-cell.

Optionally, the device also includes:
a second trigger module, configured to detect a service load of a micro-cell; and when the service load of the micro-cell is smaller than or equal to a third threshold, start a measurement process, and receive a measurement result reported by the user terminal under the micro-cell; and
a second handoff control module configured to, when the measurement result indicates that the macro-cell has a service priority higher than the service priority of the micro-cell, initiate a handoff of the user terminal under the micro-cell to the macro-cell.

Optionally, the second trigger module is further configured to, when the micro-cell has no user terminal access to the micro-cell for a time period longer than or equal to a time threshold, notify the controller to deactivate the micro-cell.

A handoff device in a heterogeneous network includes:
a second trigger module, configured to detect a service load of a micro-cell; and when the service load of the micro-cell is smaller than or equal to a third threshold, start a measurement process, and receive a measurement result reported by the user terminal under the micro-cell; and
a second handoff control module configured to, when the measurement result indicates that the macro-cell has a service priority higher than the service priority of the micro-cell, initiate a handoff of the user terminal under the micro-cell to the macro-cell.

Optionally, the second trigger module is further configured to, when the micro-cell has no user terminal access to the micro-cell for a time period longer than or equal to a time threshold, report a message indicating an idle resource state to a controller at the network side, the message indicating an idle resource state being for instructing the controller to deactivate the micro-cell.

Optionally, the second trigger module is further configured to, prior to the step of detecting a service load of a micro-cell, after the micro-cell is activated, receive an instruction for a controller at the network side to start the measurement of the cell service of the micro-cell, the measurement of the cell service including detecting the service load of the micro-cell; and when the micro-cell has no user terminal access to the micro-cell for a time period longer than or equal to the time threshold, send a cell service measurement report indicating an idle state to the controller, the cell service measurement report indicating an idle state being for instructing the controller to deactivate the micro-cell.

A computer readable storage medium storing computer executable instructions, the computer executable instructions is for implementing any of the above methods.

The embodiments of the present invention provide a scheme for improving the capacity and coverage of a macro-cell and a micro-cell in a mobile communication system (GSM, UMTS, TD-SCDMA, LTE, etc.) by coordinating the cell capacity with the collaborative macro-cell and micro-cell. Since the coverage of the macro-cell is large, the scheme of the embodiments of the present invention plays a role of dynamic balancing of the cell load. On the one hand, if the macro-cell load is too large, the centralized service processing of the macro-cell may be changed to distributed service processing of the micro-cell. On the other hand, when the load of the micro-cell is below the threshold, it may automatically hand off to the centralized service processing of the macro-cell. During the handoff process, location information, power coverage or other parameter of the user terminal are not changed. Another aspect of the embodiments of the present invention is that the micro-cell may be deactivated when the trough effect is caused and the micro-cells are idle for a long period of time. It may significantly save operating expenses.

The other aspects may be apparent from reading and understanding the accompanying drawings and the detailed description.

### BRIEF DESCRIPTION OF THE DRAWINGS

Fig. 1 is a schematic representation of a conventional horizontal single-layer isomorphic network;
Fig. 2 is a schematic diagram of a heterogeneous network;
Fig. 3 is a flow chart of a handoff method in a heterogeneous networkwork according to a first embodiment of the present invention;
Fig. 4 is a flow chart of a handoff method in a heterogeneous networkwork according to a second embodiment of the present invention;
Fig. 5 is a block diagram of a handoff device in a heterogeneous networkwork according to a third embodiment of the present invention;
Fig. 6 is a block diagram of a handoff device in a heterogeneous networkwork according to a fourth embodiment of the present invention;
Fig. 7 is a flow chart of a macro-cell according to the first embodiment of the present invention;
Fig. 8 is a flow chart of a micro-cell according to the first embodiment of the present invention;
Fig. 9 is a flow chart of a macro-cell according to the second embodiment of the present invention; and
Fig. 10 is a flow chart of a micro-cell according to the second embodiment of the present invention.

### DETAILED DESCRIPTION

Embodiments of the present invention will be described below with reference to the accompanying drawings.

It is to be noted that, the embodiments and the various features of the embodiments of the present invention may be combined with each other without conflict. In addition, although a logical order is shown in the flowcharts, in some cases the steps shown or described may be performed in an order different from the order described herein.

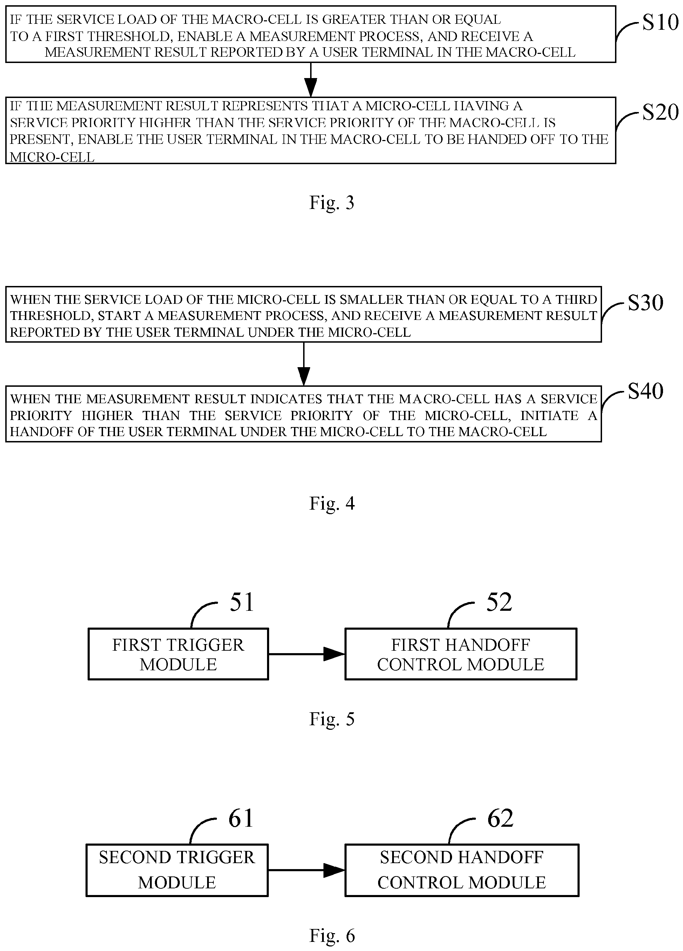

First Embodiment: A handoff method in a heterogeneous network as shown in Fig. 3 includes the following steps.

In S10, a service load of a macro-cell is detected. When the service load of the macro-cell is larger than or equal to a first threshold, a measurement process of a user terminal under the macro-cell is started, and a measurement result reported by the user terminal under the macro-cell is received.

In S20, when the measurement result indicates that a micro-cell has a service priority higher than the service priority of the macro-cell, a handoff of the user terminal under the macro-cell to the micro-cell is initiated.

In an embodiment, S10, S20 may be performed by an entity having a control function in the macro-cell (at the system side), such as, but not limited to, a master control unit in the macro-cell.

In the present embodiment, the service priority includes but is not limited to a frequency priority, a cell priority, etc. The present embodiment may automatically trigger a user terminal in a macro-cell having a low service priority to be handed off to a micro-cell, so that load distribution may be adjusted between the macro-cell and the micro-cell. By adjusting the service priority when the service load is relatively large, it may achieve load balance. Alternatively, when the service load of the macro-cell is larger than or equal to the first threshold, the method also includes the following step.

When the service load of the macro-cell is larger than or equal to the first threshold, if the service priority of the macro-cell is a first priority, the service priority of the macro-cell is adjusted to a second priority. The first priority is higher than the second priority, and higher than the service priority of the micro-cell. The second priority is lower than the service priority of the micro-cell.

In an embodiment, the step of starting the measurement process and the step of setting the service priority have no definite order, and may even be performed in parallel.

In the alternative, when the service load of the macro-cell is larger than or equal to the first threshold T1 (such as 0.9) and the current service priority is the first priority PI, the service priority of the macro-cell is lowered to the second priority P2 (P2 is lower than the service priority P' of the micro-cell, P1 is higher than P2 and P'), so that a handoff of the user terminal is triggered to access to the micro-cell.

Alternatively, the method also includes the following step.

When the service load of the macro-cell is smaller than or equal to a second threshold, if the service priority of the macro-cell is the second priority, the service priority of the macro-cell is adjusted to the first priority. The second threshold is smaller than the first threshold.

In the alternative, when the service load of the macro-cell is smaller than or equal to the second threshold T2 (such as 0.3), the service priority of the macro-cell is raised to PI, and higher than the service priority P' of the micro-cell. The second threshold T2 is smaller than the first threshold T1. The service priority of the micro-cell is a fixed P' and P1> P'> P2.

Alternatively, the method also includes the following steps.

A service load of the micro-cell is detected. When the service load of the micro-cell is smaller than or equal to a third threshold, a measurement process is started and a measurement result reported by the user terminal under the micro-cell is received.

When the measurement result indicates that the service priority of the macro-cell is higher than the priority of the micro-cell, a handoff of the user terminal under the micro-cell to the macro-cell is initiated. That is, when the service load of the micro-cell is lower than or equal to the third threshold T3 (such as 0.1), if the measurement result indicates that the service priority of the macro-cell is higher than the priority P' of the micro-cell, for example, when the service priority of the macro-cell is PI, a handoff of the user terminal under the micro-cell is triggered to access to the macro-cell.

The above alternative may be performed by an entity having a control function in the micro-cell (at the system side), such as, but not limited to, a master control unit in the micro-cell.

The above thresholds 0.9, 0.3 and 0.1 refer to a ratio between a detected service load of a cell and a maximum service load of the cell.

In the above described alternative, the entity (such as, but not limited to the master control unit) for implementing the control function in the macro-cell or the micro-cell (i.e., at the system side) decides whether to start a handoff process of the UE according to the measurement information reported by the user terminal, instead of the controller (such as a wireless network controller, a wireless network manager or other entity capable of realizing control function at the network side) at the network side starting the handoff process of the UE. The service priority of the macro-cell is modified dynamically based on the change of the load of the macro-cell. In this way, the user terminal may be handed off between the macro-cell and the micro-cell, and it may significantly improve the capacity of the cell.

The controller is a centralized management control unit which has functions including but not limited to cell state indication, activation/deactivation, cell service load measurement and other message functions for the macro-cell and micro-cell. The logical entity of the controller may be located in a network element of an E-NodeB (Evolved Node B) where the macro-cell is located, or may also be arranged separately or arranged in other network element.

Alternatively, when the service load of the macro-cell is larger than or equal to the first threshold, before the measurement process is started, the method also includes the following step.

A cell resource state indication message is reported to the controller at the network side. The cell resource state indication message carries information about the location distribution of users under the macro-cell. The information about the location distribution of users is used for instructing the controller to activate a corresponding micro-cell.

In the alternative, information about the location distribution of users is added in the cell resource state indication message, for indicating a location of each user terminal under the macro-cell. In this way, the controller may activate a corresponding micro-cell. If the corresponding micro-cell is already activated, it will not have to be activated repeatedly.

Alternatively, before the service load of the macro-cell is detected, the method also includes the following step.

An instruction for the controller at the network side to start the cell service measurement of the macro-cell is received. The cell service measurement includes detecting the service load of the macro-cell and the user location distribution under the macro-cell.

When the service load of the macro-cell is larger than or equal to the first threshold, before the measurement process is started, the method also includes the following step.

A cell service measurement report is sent to the controller. The cell service measurement report carries information about the location distribution of users under the macro-cell. The cell service measurement report is used to instruct the controller to activate a corresponding micro-cell.

In the alternative, a cell service load measurement type and information about the location distribution of users are added in the cell service measurement report. The information about the location distribution of users is for indicating a location of each user terminal under the macro-cell. In this way, the controller may activate a corresponding micro-cell. If the corresponding micro-cell is already activated, it will not have to be activated repeatedly.

Alternatively, the method also includes the following step.

When a micro-cell has no user terminal for a time period longer than or equal to a time threshold, the controller is notified to deactivate the micro-cell.

In the alternative aspect, when there is no user terminal under a micro-cell for a long time, the controller may put the micro-cell in sleep, to save energy.

In the above alternative, the first, second and third thresholds may be used as network optimization parameters, and may have initial values calculated through simulation, and then be adjusted and optimized in actual network conditions to avoid the ping-pong handoff. The time threshold may be set according to demand, simulation test, or experience.

In the above alternative, the user distribution information and the load detection of the micro-cell are reported to the controller through the macro-cell, to trigger the controller to dynamically activate or deactivate a micro-cell, and it may save operation cost.

Second Embodiment: A handoff method in a heterogeneous network as shown in Fig. 4 includes the following steps.

In step S30, a service load of a micro-cell is detected. When the service load of the micro-cell is smaller than or equal to a third threshold, a measurement process is started, and a measurement result reported by the user terminal under the micro-cell is received.

In step S40, when the measurement result indicates that the macro-cell has a service priority higher than the service priority of the micro-cell, a handoff of the user terminal under the micro-cell to the macro-cell is initiated.

Alternatively, the method also includes the following step.

When a micro-cell has no user terminal access to the micro-cell for a time period longer than or equal to a time threshold, a message indicating an idle resource state is reported to the controller at the network side. The message indicating an idle resource state is for instructing the controller to deactivate the micro-cell.

Alternatively, before the service load of the micro-cell is detected, the method also includes the following steps.

After the micro-cell is activated, an instruction for the controller at the network side to start the cell service measurement of the micro-cell is received.

When the micro-cell has no user terminal for a time period longer than or equal to the time threshold, a cell service measurement report indicating an idle state is sent to the controller.

The cell service measurement report indicating an idle state is for instructing the controller to deactivate the micro-cell.

In the alternative aspect, when there is no user terminal under a micro-cell for a long time, the controller may be triggered to put the micro-cell in sleep, to save energy.

Third Embodiment: A handoff device in a heterogeneous network as shown in Fig. 5 includes:
a first trigger module 51 configured to detect a service load of a macro-cell, when the service load of the macro-cell is larger than or equal to a first threshold, start a measurement process of a user terminal under the macro-cell, and receive a measurement result reported by the user terminal under the macro-cell; and
a first handoff control module 52 configured to, when the measurement result indicates that a micro-cell has a service priority higher than a service priority of the macro-cell, initiate a handoff of the user terminal under the macro-cell to the micro-cell.

The first trigger module and the first handoff control module may be configured (but not limited to) in the master control unit in the macro-cell.

Optionally, the first trigger module 51 is further configured to, when the service load of the macro-cell is larger than or equal to the first threshold, in case where the service priority of the macro-cell is a first priority, adjust the service priority of the macro-cell to a second priority; wherein the first priority is higher than the second priority, and higher than the service priority of the micro-cell; and the second priority is lower than the service priority of the micro-cell.

Optionally, the first trigger module 51 is further configured to, when the service load of the macro-cell is smaller than or equal to a second threshold, in case where the service priority of the macro-cell is the second priority, adjust the service priority of the macro-cell to the first priority; wherein the second threshold is smaller than the first threshold.

Optionally, the first trigger module 51 is further configured to, when the service load of the macro-cell is larger than or equal to the first threshold, prior to the step of starting a measurement process, report a cell resource state indication message to a controller at the network side; the cell resource state indication message carrying information about location distribution of users under the macro-cell; and the information about location distribution of users being for instructing the controller to activate a corresponding micro-cell.

Optionally, the first trigger module 51 is further configured to, prior to the step of detecting a service load, receive an instruction for a controller at the network side to start measurement of the cell service of the macro-cell, the measurement of the cell service including detecting the service load of the macro-cell and the user location distribution under the macro-cell; and the first trigger module 51 is further configured to, when the service load of the macro-cell is larger than or equal to the first threshold, prior to the step of starting a measurement process, send a cell service measurement report to the controller, the cell service measurement report carrying information about the location distribution of users under the macro-cell, and the cell service measurement report being for instructing the controller to activate a corresponding micro-cell.

Optionally, the device also includes:
a second trigger module, configured to detect a service load of a micro-cell; and when the service load of the micro-cell is smaller than or equal to a third threshold, start a measurement process, and receive a measurement result reported by the user terminal; and
a second handoff control module configured to, when the measurement result indicates that the macro-cell has a service priority higher than the service priority of the micro-cell, initiate a handoff of the user terminal under the micro-cell to the macro-cell.

The second trigger module and the second handoff control module may correspond to one micro-cell. That is, each micro-cell has a second trigger module and a second handoff control module, and the second trigger module and the second handoff control module perform the above operation with respect to a corresponding micro-cell. The second trigger module and the second handoff control module may be configured (but not limited to) in the master control unit in the corresponding micro-cell.

The second trigger module and the second handoff control module may also correspond to a group of micro-cells. When a micro-cell in a corresponding group of micro-cells has a service load less than or equal to a third threshold, the service priority of the micro-cell is adjusted, and the handoff is initiated with respect to the micro-cell.

Optionally, the second trigger module is further configured to, when the micro-cell has no user terminal access to the micro-cell for a time period longer than or equal to a time threshold, notify the controller to deactivate the micro-cell.

Fourth Embodiment: A handoff device in a heterogeneous network as shown in Fig. 6 includes:
a second trigger module 61, configured to detect a service load of a micro-cell; and when the service load of the micro-cell is smaller than or equal to a third threshold, start a measurement process, and receive a measurement result reported by the user terminal under the micro-cell; and
a second handoff control module 62 configured to, when the measurement result indicates that the macro-cell has a service priority higher than the service priority of the micro-cell, initiate a handoff of the user terminal under the micro-cell to the macro-cell.

The second trigger module and the second handoff control module may correspond to one micro-cell. That is, each micro-cell has a second trigger module and a second handoff control module, and the second trigger module and the second handoff control module perform the above operation with respect to a corresponding micro-cell. The second trigger module and the second handoff control module may be configured (but not limited to) in the master control unit in the corresponding micro-cell.

The second trigger module and the second handoff control module may also correspond to a group of micro-cells. When a micro-cell in a corresponding group of micro-cells has a service load less than or equal to a third threshold, the service priority of the micro-cell is adjusted, and the handoff is initiated with respect to the micro-cell.

Optionally, the second trigger module 61 is further configured to, when the micro-cell has no user terminal access to the micro-cell for a time period longer than or equal to a time threshold, report a message indicating an idle resource state to a controller at the network side, the message indicating an idle resource state being for instructing the controller to deactivate the micro-cell.

Optionally, the second trigger module 61 is further configured to, prior to the step of detecting a service load of a micro-cell, after the micro-cell is activated, receive an instruction for a controller at the network side to start the measurement of the cell service of the micro-cell, the measurement of the cell service including detecting a service load of the micro-cell; and when the micro-cell has no user terminal access to the micro-cell for a time period longer than or equal to the time threshold, send a cell service measurement report indicating an idle state to the controller, the cell service measurement report indicating an idle state being for instructing the controller to deactivate the micro-cell.

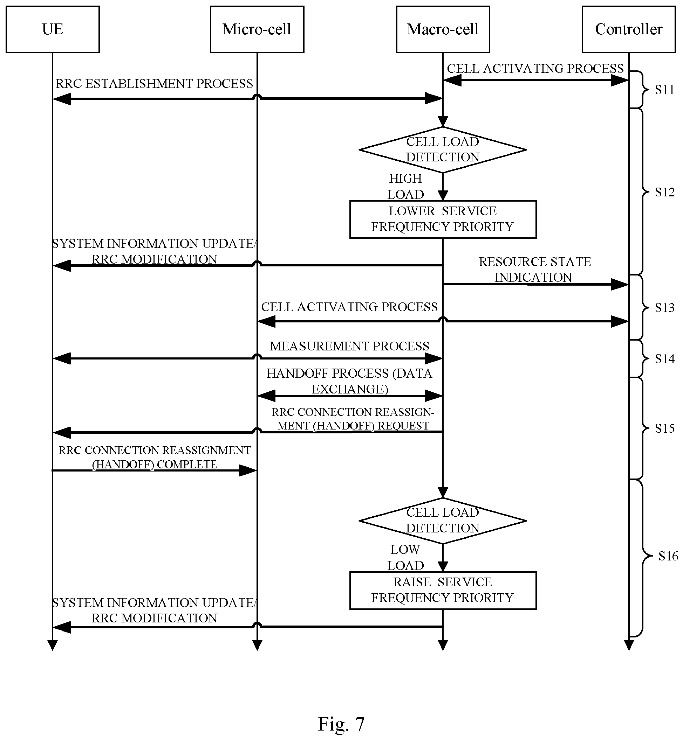

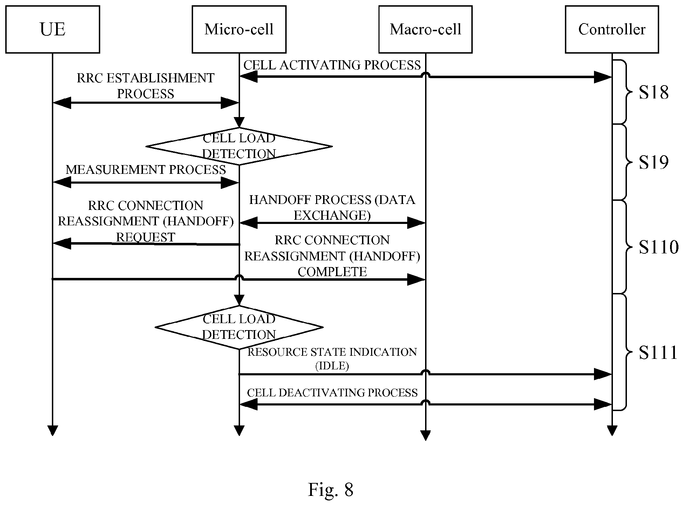

Figs. 7 and 8 are flowcharts of the first embodiment of the present invention. The first embodiment 1 is a method for a macro-cell and a micro-cell to respectively send a message indicating a cell resource state to a controller, for the controller to activate or deactivate a micro-cell. Fig. 7 is a flowchart illustrating a process under the macro-cell, and Fig. 8 is a flowchart illustrating a process under the micro-cell. The macro-cell/micro-cell in the figures refers to an entity having a control function.

The following describes the process under the macro-cell. As shown in Fig. 7, the process implements the steps S11∼S17.

In S11, the controller sends a cell activation instruction to the macro-cell, a user terminal (UE) under the macro-cell completes an establishment/reassignment process of the Radio Resource Control (RRC), to hand off and access to the macro-cell.

In step S12, a real-time service load detection is performed for the macro-cell. When the service load of the macro-cell is larger than or equal to a first threshold T1 (such as 0.9) and has a service priority of PI, the service priority is lowered to P2. System information update or RRC modification is initiated, and all the user terminals under the macro-cell are notified. In the embodiment, the service priority is a frequency priority, and the actual application is not limited thereto.

S13: Then, the message indicating a cell resource state of the macro-cell is reported to the controller. The message indicating a cell resource state carries information about the location distribution of users under the macro-cell. After the controller receives the message indicating a cell resource state, the controller activates a corresponding micro-cell according to the carried information about the location distribution of users and other information.

In step S14, a measurement process is started. The user terminal under the macro-cell measures information about the macro-cell and the micro-cell, and reports the information to the macro-cell.

In step S15, when, according to the information measured and reported by the user terminal, presence of a micro-cell is detected, and it is detected that the service priority P2 of the macro-cell is lower than the service priority P' of the micro-cell, a handoff process of the user terminal under the macro-cell to the micro-cell is initiated, a handoff process to the micro-cell is firstly initiated, to perform data exchange. Then, a RRC connection reassignment (handoff) request is sent to the user terminal, to complete a RRC connection reassignment (handoff) between the user terminal and the micro-cell.

In step S16, it continues to detect the service load of the macro-cell. When the service load of the macro-cell is lower than or equal to the second threshold T2 (such as 0.3) and has a service priority P2, the service priority is raised to P1. System information update or RRC modification is initiated, and all the user terminals under the macro-cell are notified.

In the above process, the step S16 and the steps S12∼S15 have no definite order. Next, it continues to detect the service load of the macro-cell, and performs corresponding steps of the above process according to the detection result of the service load, and the condition satisfied by the current service priority. In each process performed, the micro-cell involved may be the same micro-cell or different micro-cells. If a micro-cell is already activated, the micro-cell will not have to be activated repeatedly.

The following describes the process under the micro-cell. As shown in Fig. 8, the process implements the steps S18∼S112.

In step S18, the controller sends a cell activation instruction to the micro-cell, a user terminal (UE) under the micro-cell completes a RRC establishment/reassignment process, to hand off and access to the micro-cell.

In step S19, a service load of the micro-cell is detected. When the service load of the micro-cell is lower than or equal to a third threshold T3 (0.1 by default), a measurement process is started, and the user terminal under the micro-cell measures information about the macro-cell and the micro-cell, and reports the information to the micro-cell.

In step S110, when, according to the information measured and reported by the user terminal, presence of a macro-cell is detected, and it is detected that the service priority P1 of the macro-cell is higher than the service priority P' of the micro-cell, a handoff process of the user terminal under the micro-cell to the macro-cell is initiated, a handoff process to the macro-cell is firstly initiated, to perform data exchange. Then, a RRC connection reassignment (handoff) request is sent to the user terminal, to complete a RRC connection reassignment (handoff) between the user terminal and the macro-cell.

In step Sill, the service load of the micro-cell is detected. If the micro-cell is idle for a long time period, that is, if the micro-cell has no user terminal access to the micro-cell for a time period longer than or equal to a time threshold, the message indicating an (idle) resource state is reported to the controller, for the controller to deactivate the micro-cell.

Next, it continues to detect the service load of the micro-cell, and performs corresponding steps of the above process according to the detection result of the service load, and the condition satisfied by the current service priority. The above process of steps S18∼S111 may be performed for each micro-cell, and the step Sill and the steps S18∼S110 have no definite order.

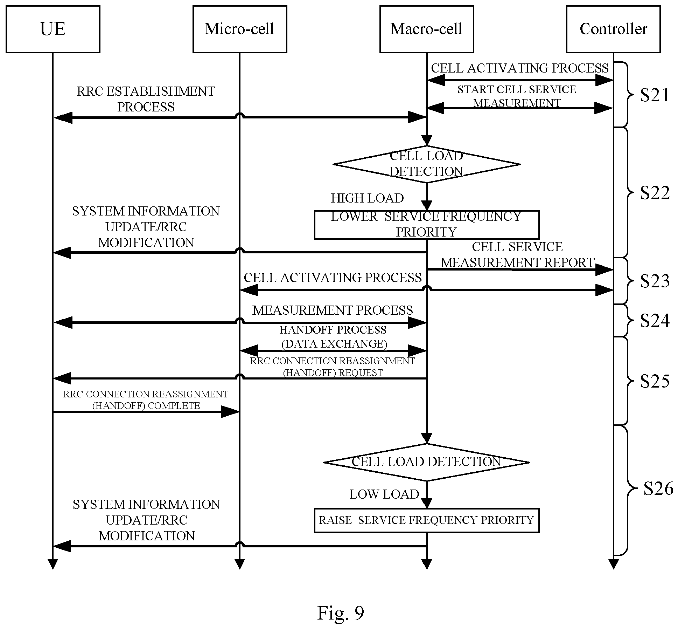

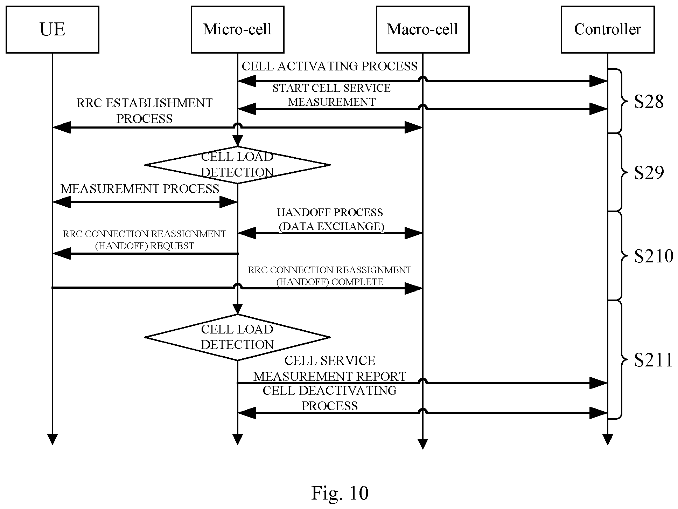

Figs. 9 and 10 are flowcharts of the second embodiment of the present invention. The controller starts the process of measuring the cell loads of the macro-cell and the micro-cell, and activates or deactivates the micro-cell according to the measurement report of the macro-cell and the micro-cell. Fig. 9 is a flowchart illustrating a process under the macro-cell, and Fig. 10 is a flowchart illustrating a process under the micro-cell. The macro-cell/micro-cell in the figures refers to an entity having a control function.

The main process may refer to the first embodiment, with the same steps S22 and S12. The steps S24∼S26 are the same as the steps S14∼S16, and S19∼S110 are the same as the S29∼S210, respectively.

The process and event differ from the first embodiment in that:
Event A measurement: if the service load of the macro-cell is larger than or equal to the first threshold T1, a cell service measurement report is transmitted.
Event B measurement: if the service load of the micro-cell is smaller than or equal to the third threshold T3, a cell service measurement report is transmitted.

Step S21 is the same as the step S11 except that additionally in the step S21, after the controller activates the macro-cell, the operation of the Event A measurement is started.

Step S28 is the same as the step S18 except that additionally in the step S28, after the controller activates the micro-cell, the operation of the Event B measurement is started.

Step S23 is the same as the step S13 except that in the step S23, the message indicating a cell resource state of the cell is replaced with the cell service measurement report. Step S211 is the same as the step Sill except that in the step S211, the message indicating a cell resource state of the cell is replaced with the cell service measurement report.

It will be understood by those of ordinary skill in the art that all or a portion of the steps of the embodiments described above may be implemented using a computer program that may be stored in a computer readable storage medium. The computer program may be executed on a corresponding hardware platform (such as a system, a device, an apparatus, a means, etc.). When executed, the program includes the steps of one or combination of the method embodiments.

Alternatively, all or part of the steps of the embodiments described above may also be implemented using integrated circuits, which may be separately integrated into one integrated circuit module or a plurality of modules, or a plurality of modules or steps may be integrated into a single integrated circuit module.

The devices / functional modules / functional units in the above embodiments may be implemented using a general purpose computing device, which may be integrated on a single computing device or may be distributed over a network composed of multiple computing devices.

The device / function module / functional unit in the above embodiment may be realized in the form of a software function module and may be stored in a computer-readable storage medium when it is sold or used as a separate product. The above-mentioned computer-readable storage medium may be a read-only memory, a magnetic disk, or an optical disk.

### Industrial utility

The embodiments of the present invention provide a scheme for improving the capacity and coverage of a macro-cell and a micro-cell in a mobile communication system (GSM, UMTS, TD-SCDMA, LTE, etc.) by coordinating the cell capacity with the collaborative macro-cell and micro-cell. Since the coverage of the macro-cell is large, the scheme of the embodiments of the present invention plays a role of dynamic balancing of the cell load. On the one hand, if the macro-cell load is too large, the centralized service processing of the macro-cell may be changed to distributed service processing of the micro-cell. On the other hand, when the load of the micro-cell is below the threshold, it may automatically hand off to the centralized service processing of the macro-cell. During the handoff process, location information, power coverage or other parameter of the user terminal are not changed. Another aspect of the embodiments of the present invention is that the micro-cell may be deactivated when the trough effect is caused and the micro-cells are idle for a long period of time. It may significantly save operating expenses.

## Claims

1. A handoff method in a heterogeneous network, comprising:
detecting a service load of a macro-cell, when the service load of the macro-cell is larger than or equal to a first threshold, starting a measurement process of a user terminal under the macro-cell, and receiving a measurement result reported by the user terminal under the macro-cell; and
when the measurement result indicates that a micro-cell has a service priority higher than a service priority of the macro-cell, initiating a handoff of the user terminal under the macro-cell to the micro-cell.

2. The method according to claim 1, further comprising:
when the service load of the macro-cell is larger than or equal to the first threshold, in case where the service priority of the macro-cell is a first priority, adjusting the service priority of the macro-cell to a second priority;
wherein the first priority is higher than the second priority, and higher than the service priority of the micro-cell; and
the second priority is lower than the service priority of the micro-cell.

3. The method according to claim 2, further comprising:
when the service load of the macro-cell is smaller than or equal to a second threshold, in case where the service priority of the macro-cell is the second priority, adjusting the service priority of the macro-cell to the first priority;
wherein the second threshold is smaller than the first threshold.

4. The method according to claim 1, wherein when the service load of the macro-cell is larger than or equal to the first threshold, prior to the step of starting a measurement process of a user terminal under the macro-cell, the method further comprises:
reporting a cell resource state indication message to a controller at the network side;
wherein the cell resource state indication message carries information about location distribution of users under the macro-cell; and
the information about location distribution of users is for instructing the controller to activate a corresponding micro-cell.

5. The method according to claim 1, wherein
prior to the step of detecting a service load of a macro-cell, the method further comprises:
receiving an instruction for a controller at the network side to start measurement of the cell service of the macro-cell, the measurement of the cell service comprising detecting the service load of the macro-cell and the user location distribution under the macro-cell; and
when the service load of the macro-cell is larger than or equal to the first threshold, prior to the step of starting a measurement process of a user terminal under the macro-cell, the method further comprises:
sending a cell service measurement report to the controller, the cell service measurement report carrying information about the location distribution of users under the macro-cell, and the cell service measurement report being for instructing the controller to activate a corresponding micro-cell.

6. The method according to any one of claims 1-5, further comprising:
detecting a service load of a micro-cell;
when the service load of the micro-cell is smaller than or equal to a third threshold, starting a measurement process, and receiving a measurement result reported by the user terminal under the micro-cell; and
when the measurement result indicates that the macro-cell has a service priority higher than the service priority of the micro-cell, initiating a handoff of the user terminal under the micro-cell to the macro-cell.

7. The method according to claim 6, further comprising:
when the micro-cell has no user terminal access to the micro-cell for a time period longer than or equal to a time threshold, notifying the controller at the network side to deactivate the micro-cell.

8. A handoff method in a heterogeneous network, comprising:
detecting a service load of a micro-cell;
when the service load of the micro-cell is smaller than or equal to a third threshold, starting a measurement process, and receiving a measurement result reported by the user terminal under the micro-cell; and
when the measurement result indicates that the macro-cell has a service priority higher than the service priority of the micro-cell, initiating a handoff of the user terminal under the micro-cell to the macro-cell.

9. The method according to claim 8, further comprising:
when the micro-cell has no user terminal access to the micro-cell for a time period longer than or equal to a time threshold, reporting a message indicating an idle resource state to a controller at the network side, the message indicating an idle resource state being for instructing the controller to deactivate the micro-cell.

10. The method according to claim 8, wherein prior to the step of detecting a service load of a micro-cell, the method further comprises:
after the micro-cell is activated, receiving an instruction for a controller at the network side to start the measurement of the cell service of the micro-cell, the measurement of the cell service comprising detecting the service load of the micro-cell; and
when the micro-cell has no user terminal access to the micro-cell for a time period longer than or equal to the time threshold, sending a cell service measurement report indicating an idle state to the controller, the cell service measurement report indicating an idle state being for instructing the controller to deactivate the micro-cell.

11. A handoff device in a heterogeneous network, comprising:
a first trigger module configured to detect a service load of a macro-cell, when the service load of the macro-cell is larger than or equal to a first threshold, start a measurement process of a user terminal under the macro-cell, and receive a measurement result reported by the user terminal under the macro-cell; and
a first handoff control module configured to, when the measurement result indicates that a micro-cell has a service priority higher than a service priority of the macro-cell, initiate a handoff of the user terminal under the macro-cell to the micro-cell.

12. The device according to claim 11, wherein
the first trigger module is further configured to, when the service load of the macro-cell is larger than or equal to the first threshold, in case where the service priority of the macro-cell is a first priority, adjust the service priority of the macro-cell to a second priority;
wherein the first priority is higher than the second priority, and higher than the service priority of the micro-cell; and
the second priority is lower than the service priority of the micro-cell.

13. The device according to claim 11 or 12, further comprising:
a second trigger module, configured to detect a service load of a micro-cell; and when the service load of the micro-cell is smaller than or equal to a third threshold, start a measurement process, and receive a measurement result reported by the user terminal under the micro-cell; and
a second handoff control module configured to, when the measurement result indicates that the macro-cell has a service priority higher than the service priority of the micro-cell, initiate a handoff of the user terminal under the micro-cell to the macro-cell.

14. A handoff device in a heterogeneous network, comprising:
a second trigger module, configured to detect a service load of a micro-cell; and when the service load of the micro-cell is smaller than or equal to a third threshold, start a measurement process, and receive a measurement result reported by the user terminal under the micro-cell; and
a second handoff control module configured to, when the measurement result indicates that the macro-cell has a service priority higher than the service priority of the micro-cell, initiate a handoff of the user terminal under the micro-cell to the macro-cell.

15. A computer readable storage medium storing computer executable instructions, the computer executable instructions being for implementing the method according to anyone of claims 1-10.
